# FASCICULE DE BREVET EUROPEEN

(11) **EP 3 152 472 B1**
(45) Date de publication et mention de la délivrance du brevet: **23.05.2018**
(21) Numéro de dépôt: 15732828.7
(22) Date de dépôt: 01.06.2015
(51) Int. Cl.: F04B 9/10, F16L 21/035, F16L 27/10, F16L 17/02, F16L 27/08

(54) **RACCORD D'ETANCHEITE TOURNANT HAUTE-PRESSION A BAGUE CONTINUE EXTENSIBLE**
ROTIERENDER HOCHDRUCKDICHTUNGSSTOPFEN MIT EXPANDIERBAREM DURCHGEHENDEM RING
HIGH-PRESSURE ROTARY SEAL-PLUG ASSEMBLY WITH EXPANDABLE CONTINUOUS RING

(30) Priorité: 06.06.2014 FR 1455195
(43) Date de publication de la demande: 12.04.2017
(73) Titulaire: Rabhi, Vianney, 69006 Lyon (FR)
(72) Inventeur: Rabhi, Vianney, 69006 Lyon (FR)
(74) Mandataire: Godard, Xavier
(86) Numéro de dépôt international: PCT/FR2015/051438
(87) Numéro de publication internationale: WO 2015/185839

(56) Documents cités:
- EP-A1- 1 662 191
- WO-A1-2007/071047
- FR-A5- 2 205 168
- GB-A- 1 574 298

## Description

La présente invention a pour objet un raccord d'étanchéité tournant haute-pression à bague continue extensible.

De nombreuses applications nécessitent de réaliser une étanchéité entre deux éléments qui tournent l'un par rapport à l'autre, et entre lesquels doit pouvoir s'établir un ou plusieurs débits de fluide hydraulique ou gazeux mis sous haute pression, via des conduits respectivement aménagés à l'intérieur de chacun desdits éléments.

On connait d'après le brevet d'invention FR 2205168 un dispositif d'étanchéité pour tuyaux ou bague d'obturation constitué d'un joint d'étanchéité comprenant une garniture comprimée radialement et des moyens de protection de cette garniture contre les agents corrosifs.

On connaît également d'après le brevet européen EP 1662191 un dispositif tournant de passage pour l'arrivée et/ou l'évacuation de fluide à partir d'une cavité axiale comprenant des moyens d'étanchéité constitués d'une première bague d'insertion disposée sur la partie de passage fixe et une seconde bague d'insertion sur la partie de passage rotative.

Une application consiste par exemple à alimenter en fluide hydraulique - depuis un stator - des cylindres aménagés dans le rotor d'une pompe hydraulique à pistons tournants haute-pression. S'agissant de ladite application et suivant un mode particulier de réalisation, un même raccord d'étanchéité tournant peut présenter un conduit aller et un conduit retour pour permettre audit fluide d'entrer sous basse pression dans ledit rotor puis d'en ressortir sous haute pression par le même dit raccord.

A titre d'autre exemple, un raccord d'étanchéité tournant peut être utilisé dans certains embrayages hydrauliques, ledit raccord ne présentant qu'un seul conduit qui assure à la fois l'aller et le retour du fluide hydraulique.

Finalement, de nombreuses applications industrielles et domestiques nécessitent la mise en oeuvre d'un ou plusieurs raccords tournants dans le domaine des hautes-pressions tels que par exemple ceux commercialisés par la société « Duff-Norton ».

L'étanchéité de ces raccords est le plus souvent assurée par une pression de contact réalisée entre les éléments tournants l'un par rapport à l'autre et ceci, par l'intermédiaire de matériaux résistants à l'abrasion et réputés présenter un coefficient de frottement réduit comme le carbone-graphite, la céramique, le carbure de tungstène ou le polytétrafluoroéthylène dit « PTFE » ou « Téflon ». Lesdits matériaux sont notamment choisis tenant compte du fluide à étancher selon qu'il soit liquide ou gazeux, et selon le degré de corrosivité dudit fluide.

Lesdits matériaux étant généralement soumis à de fortes pressions de contact et à des vitesses de glissement élevées, leur durée de vie est limitée au point qu'il peut être nécessaire de les changer régulièrement, que leur vitesse de rotation est limitée de même que leur pression de service, qui excède rarement mille bars.

On comprend ainsi toute la difficulté de concevoir et de réaliser des raccords d'étanchéité tournants opérant à la fois dans le domaine des très hautes pressions - de l'ordre de mille bars voire jusqu'à deux-mille bars et plus - qui soient suffisamment étanches, durables pour éviter toute maintenance, et qui puissent opérer à hautes vitesses de rotation tout en restant compacts, peu chers, et peu dissipateurs d'énergie par frottement.

On note que diverses applications verraient leur efficacité significativement augmentée par de tels raccords, parmi lesquelles le moteur-pompe hydraulique à cylindrée fixe ou variable objet de la demande de brevet n° FR 1354562 en date du 22 mai 2013 appartenant au demandeur.

C'est pour résoudre ce problème lié à la conception, à la réalisation, à la durabilité et à l'efficacité fonctionnelle et énergétique des raccords d'étanchéité tournants que le raccord d'étanchéité tournant haute-pression à bague continue extensible selon l'invention propose que, selon un mode particulier de réalisation :
- A mêmes pertes par frottement, les débits de fuite survenant entre les conduits d'aspiration et les conduits de refoulement de certaines pompes hydrauliques sont réduits de même que les débits de fuite survenant entre lesdits conduits et les cylindres tournants que peuvent comporter lesdites pompes ;
- A même niveau d'étanchéité, les pertes par frottement générées par les raccords tournants permettant de relier les conduits d'aspiration et de refoulement fixes avec les cylindres tournants que comportent en général les pompes hydrauliques sont réduites ;

En conséquence, le raccord d'étanchéité tournant haute-pression à bague continue extensible selon l'invention permet notamment :
- De contribuer à la réalisation de pompes hydrauliques à haut rendement volumétrique et énergétique ;
- De permettre la conception et la fabrication de pompes hydrauliques pouvant favorablement constituer, avec d'autres composants, une transmission hybride hydraulique à haut rendement énergétique destinée à la propulsion de véhicules automobiles ;
- De potentiellement améliorer l'efficacité fonctionnelle et/ou énergétique de toute machine ou dispositif nécessitant un raccord d'étanchéité tournant haute-pression.

En outre, le raccord d'étanchéité tournant haute-pression à bague continue extensible selon l'invention présente un faible prix de revient, sa fabrication ne faisant appel à aucun procédé complexe ou matériau onéreux. Ledit raccord est également prévu pour offrir une grande robustesse et une longue durée de vie et pour opérer dans le domaine des hautes pressions hydrauliques. Ledit raccord est aussi applicable à toute pompe hydraulique à cylindrée fixe ou variable, que ladite pompe soit notamment à palettes, à pistons axiaux, à pistons radiaux, à cylindres tournants ou non et quel que soit le fluide liquide, gazeux, ou semi-liquide qu'elle opère.

Les autres caractéristiques de la présente invention ont été décrites dans la description et dans les revendications secondaires dépendantes directement ou indirectement de la revendication principale.

Le raccord d'étanchéité tournant haute-pression à bague continue extensible suivant la présente invention comprend :
- Au moins un connecteur hydraulique mâle faisant partie intégrante d'un corps d'alimentation mâle et un connecteur hydraulique femelle qui fait partie intégrante d'un corps d'alimentation femelle, lesdits connecteurs, étant coaxiaux tandis que le connecteur hydraulique mâle est logé à l'intérieur du connecteur hydraulique femelle et peut tourner par rapport à ce denier selon un axe longitudinal commun aux deux dits connecteurs, cependant que le connecteur hydraulique mâle présente une face de connexion mâle qui fait face à une face de connexion femelle que comporte le connecteur hydraulique femelle, lesdites faces de connexion, étant principalement des formes de révolution ;
- Au moins un conduit interne de fluide de connecteur mâle aménagé à l'intérieur du connecteur hydraulique mâle, dans lequel peut circuler un fluide, et dont l'une des extrémités débouche dans une chambre de communication aménagée dans le corps d'alimentation femelle et/ou le corps d'alimentation mâle ;
- Au moins un conduit interne de fluide de connecteur femelle aménagé à l'intérieur du connecteur hydraulique femelle, dans lequel peut circuler le fluide, et dont l'une des extrémités débouche dans la chambre de communication ;
- Au moins un tronçon cylindrique femelle d'étanchéité aménagé sur la face de connexion femelle et/ou un tronçon cylindrique mâle d'étanchéité aménagé sur la face de connexion mâle ;
- Au moins une bague d'étanchéité non-extensible montée autour du connecteur hydraulique mâle et qui peut coulisser le long de ce dernier, ladite bague étant logée à faible jeu dans le tronçon cylindrique femelle d'étanchéité et/ou, au moins une bague d'étanchéité non-extensible logée dans le connecteur hydraulique femelle et qui peut translater longitudinalement à l'intérieur de ce dernier, ladite bague étant montée à faible jeu autour du tronçon cylindrique mâle d'étanchéité ;
- Au moins une bague continue extensible de forme annulaire continue, intercalée axialement entre la bague d'étanchéité non-extensible et un épaulement d'appui annulaire de bague aménagé ou rapporté sur la face de connexion mâle ou sur la face de connexion femelle, ladite bague continue comprenant soit, une face cylindrique interne de bague extensible pouvant être soumise à la pression du fluide contenu dans la chambre de communication via un canal de transmission de pression de sorte qu'une face cylindrique externe de bague extensible que comporte ladite bague continue entre en contact sur toute sa circonférence extérieure avec le tronçon cylindrique femelle d'étanchéité, soit une face cylindrique externe de bague extensible pouvant être soumise à la pression du fluide contenu dans la chambre de communication via un canal de transmission de pression de sorte qu'une face cylindrique interne de bague extensible que comporte ladite bague continue entre en contact sur toute sa circonférence intérieure avec le tronçon cylindrique mâle d'étanchéité, ladite bague continue extensible comportant une face axiale coté bague non-extensible maintenue directement ou indirectement en contact étanche avec la bague d'étanchéité non-extensible et une face axiale coté épaulement d'appui maintenue directement ou indirectement en contact étanche avec l'épaulement d'appui annulaire de bague ;
- Au moins un ressort de bague non-extensible qui tend à rapprocher la bague d'étanchéité non-extensible de l'épaulement d'appui annulaire de bague, et à comprimer axialement la bague continue extensible.

Le raccord d'étanchéité tournant haute-pression à bague continue extensible suivant la présente invention comprend une portion de longueur axiale de la face cylindrique interne de bague extensible qui est la plus proche de l'épaulement d'appui annulaire de bague qui est en moyenne d'un diamètre plus petit que la portion de longueur axiale de ladite face cylindrique qui est la plus proche de la bague d'étanchéité non-extensible tandis que la face cylindrique externe de bague extensible reste pour sa part approximativement de même diamètre sur toute sa longueur axiale.

Le raccord d'étanchéité tournant haute-pression à bague continue extensible suivant la présente invention comprend une portion de longueur axiale de la face cylindrique externe de bague extensible qui est la plus proche de l'épaulement d'appui annulaire de bague qui est en moyenne d'un plus grand diamètre que la portion de longueur axiale de ladite face cylindrique qui est la plus proche de la bague d'étanchéité non-extensible tandis que la face cylindrique interne de bague extensible reste pour sa part approximativement de même diamètre sur toute sa longueur axiale.

Le raccord d'étanchéité tournant haute-pression à bague continue extensible suivant la présente invention comprend une ligne de contact circonférentielle externe qui est aménagée en protubérance sur la face cylindrique externe de bague extensible, ladite ligne étant excentrée sur la longueur axiale de la bague continue extensible en direction de la bague d'étanchéité non-extensible de sorte que du coté de ladite ligne orienté en direction de l'épaulement d'appui annulaire de bague soit constituée une pente longue de faible inclinaison, tandis que du coté de ladite ligne orienté en direction de la bague d'étanchéité non-extensible est constituée une pente courte de forte inclinaison.

Le raccord d'étanchéité tournant haute-pression à bague continue extensible suivant la présente invention comprend une ligne de contact circonférentielle interne qui est aménagée en protubérance sur la face cylindrique interne de bague extensible, ladite ligne étant excentrée sur la longueur axiale de la bague continue extensible en direction de la bague d'étanchéité non-extensible de sorte que du coté de ladite ligne orienté en direction de l'épaulement d'appui annulaire de bague soit constituée une pente longue de faible inclinaison, tandis que du coté de ladite ligne orienté en direction de la bague d'étanchéité non-extensible est constituée une pente courte de forte inclinaison.

Le raccord d'étanchéité tournant haute-pression à bague continue extensible suivant la présente invention comprend une face axiale coté bague non-extensible et/ou une face axiale coté épaulement d'appui qui comporte une protubérance annulaire axiale.

Le raccord d'étanchéité tournant haute-pression à bague continue extensible suivant la présente invention comprend un corps d'alimentation femelle ou un corps d'alimentation mâle qui forme un rotor de pompe hydraulique pour une pompe hydraulique à pistons, ledit rotor comportant au moins un cylindre hydraulique dans lequel un piston hydraulique peut alternativement translater longitudinalement et de façon étanche de sorte à former avec ledit cylindre une chambre à huile de pompe de volume variable qui peut aspirer ou refouler le fluide, ladite chambre à huile étant reliée à la chambre de communication par le conduit interne de fluide de connecteur femelle ou le conduit interne de fluide de connecteur mâle via un clapet de refoulement de pompe ce dernier permettant au fluide de sortir de la chambre à huile de pompe pour aller vers la chambre de communication mais non l'inverse, tandis que la chambre à huile de pompe comporte également un clapet d'admission de pompe qui permet au fluide d'entrer dans ladite chambre à huile, mais non d'en sortir.

Le raccord d'étanchéité tournant haute-pression à bague continue extensible suivant la présente invention comprend un connecteur hydraulique mâle qui est maintenu centré dans le connecteur hydraulique femelle et articulé par rapport à ce dernier par au moins un palier de connecteur.

Le raccord d'étanchéité tournant haute-pression à bague continue extensible suivant la présente invention comprend un conduit interne de fluide de connecteur mâle et/ou un conduit interne de fluide de connecteur femelle qui est relié à un corps de raccordement par l'intermédiaire d'au moins un conduit externe de raccordement qui est arrimé par une première extrémité, au corps d'alimentation mâle ou au corps d'alimentation femelle au moyen d'une liaison rotule étanche de corps d'alimentation et par une deuxième extrémité, au corps de raccordement au moyen d'une liaison rotule étanche de corps de raccordement.

Le raccord d'étanchéité tournant haute-pression à bague continue extensible suivant la présente invention comprend une liaison rotule étanche de corps d'alimentation et/ou une liaison rotule étanche de corps de raccordement qui est notamment constituée d'une portée-rotule obturatrice troncosphérique que comporte le conduit externe de raccordement, ladite portée-rotule reposant sur un siège de rotule obturatrice aménagé soit dans le corps d'alimentation mâle ou dans le corps d'alimentation femelle s'agissant de la première extrémité du conduit externe de raccordement, soit dans le corps de raccordement s'agissant de la deuxième extrémité dudit conduit externe.

Le raccord d'étanchéité tournant haute-pression à bague continue extensible suivant la présente invention comprend une portée-rotule obturatrice troncosphérique qui est soit montée fixement sur le conduit externe de raccordement, soit constitue avec ce dernier une liaison glissante étanche ou une liaison pivot-glissant étanche.

Le raccord d'étanchéité tournant haute-pression à bague continue extensible suivant la présente invention comprend une portée-rotule obturatrice troncosphérique qui est directement ou indirectement maintenue au contact du siège de rotule obturatrice par un ressort de portée-rotule.

Le raccord d'étanchéité tournant haute-pression à bague continue extensible suivant la présente invention comprend une extrémité longitudinale de la bague d'étanchéité non-extensible qui est maintenue en contact étanche avec la face axiale coté bague non-extensible qui présente un profil tronconique ou troncosphérique réalisé en creux ou en saillie.

La description qui va suivre en regard des dessins annexés, donnés à titre d'exemples non-limitatifs permettra de mieux comprendre l'invention, les caractéristiques qu'elle présente, et les avantages qu'elle est susceptible de procurer :

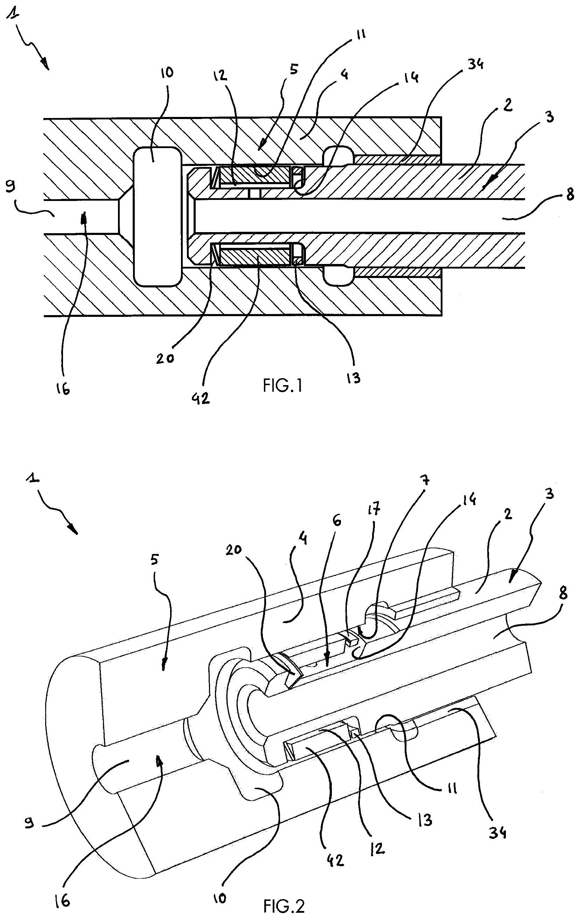

Figures 1 et 2 sont respectivement une vue en coupe schématique et une vue tridimensionnelle en écorché du raccord d'étanchéité tournant haute-pression a bague continue extensible suivant l'invention, selon une variante qui prévoit que la face de connexion femelle comporte un tronçon cylindrique femelle d'étanchéité dans lequel la bague d'étanchéité non-extensible est logée à faible jeu, de même que la bague continue extensible dont la face cylindrique externe de bague extensible peut entrer en contact sur toute sa circonférence extérieure avec ledit tronçon cylindrique femelle sous l'effet de la pression du fluide.

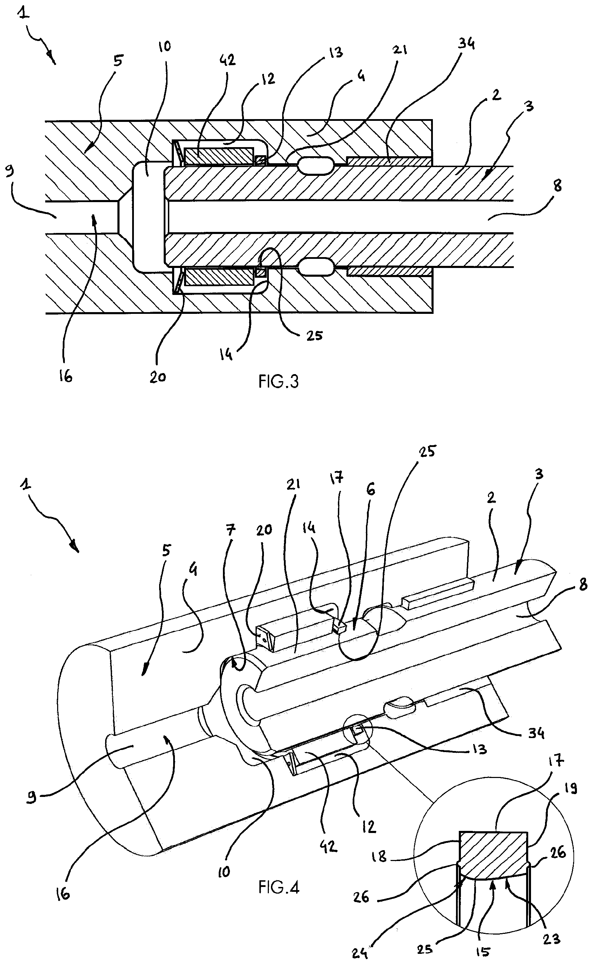

Figures 3 et 4 sont respectivement une vue en coupe schématique et une vue tridimensionnelle en écorché du raccord d'étanchéité tournant haute-pression a bague continue extensible suivant l'invention, selon une variante prévoyant que la face de connexion mâle comporte un tronçon cylindrique mâle d'étanchéité autour duquel la bague d'étanchéité non-extensible est logée à faible jeu, de même que la bague continue extensible dont la face cylindrique interne de bague extensible peut entrer en contact sur toute sa circonférence intérieure avec ledit tronçon cylindrique mâle sous l'effet de la pression du fluide, ladite vue tridimensionnelle en écorché incluant une coupe schématique montrant plus en détail la section de la bague continue extensible.

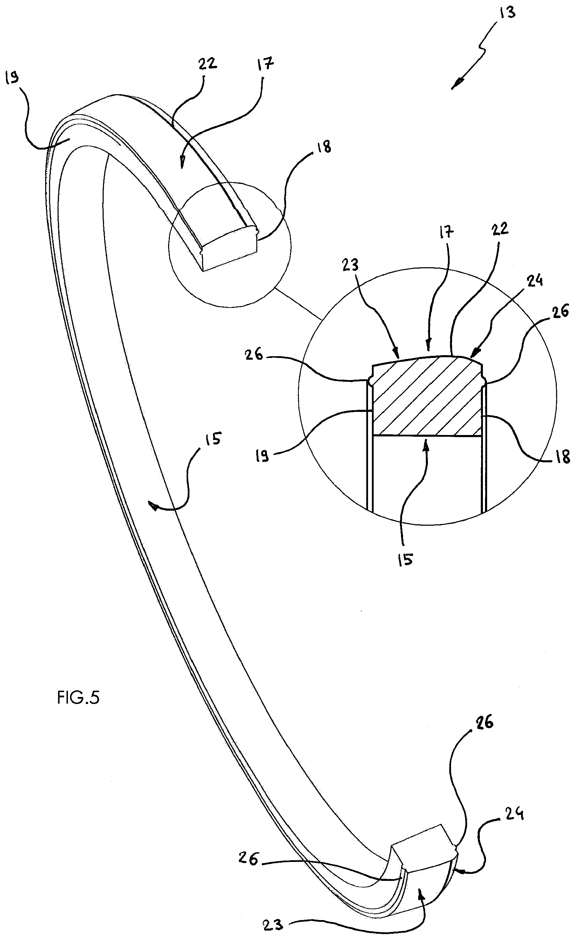

Figure 5 est une vue tridimensionnelle en écorché de la bague continue extensible telle qu'elle peut être prévue pour le raccord d'étanchéité tournant haute-pression a bague continue extensible suivant l'invention, ladite vue incluant une coupe schématique montrant plus en détail la section de ladite bague.

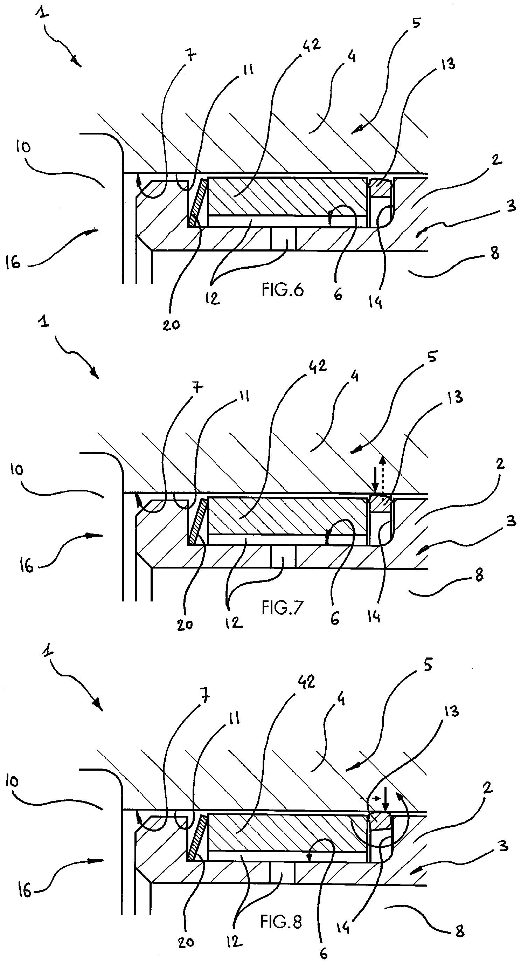

Figures 6, 7 et 8 illustrent le fonctionnement du raccord d'étanchéité tournant haute-pression a bague continue extensible suivant l'invention lorsque respectivement soumis à une pression nulle, à une pression moyenne, et à une forte pression du fluide, ces figures illustrant plus particulièrement le fonctionnement de la bague continue extensible lorsque la face cylindrique externe de bague extensible que comporte cette dernière est prévue pour entrer en contact avec le tronçon cylindrique femelle d'étanchéité sous l'effet de la pression dudit fluide.

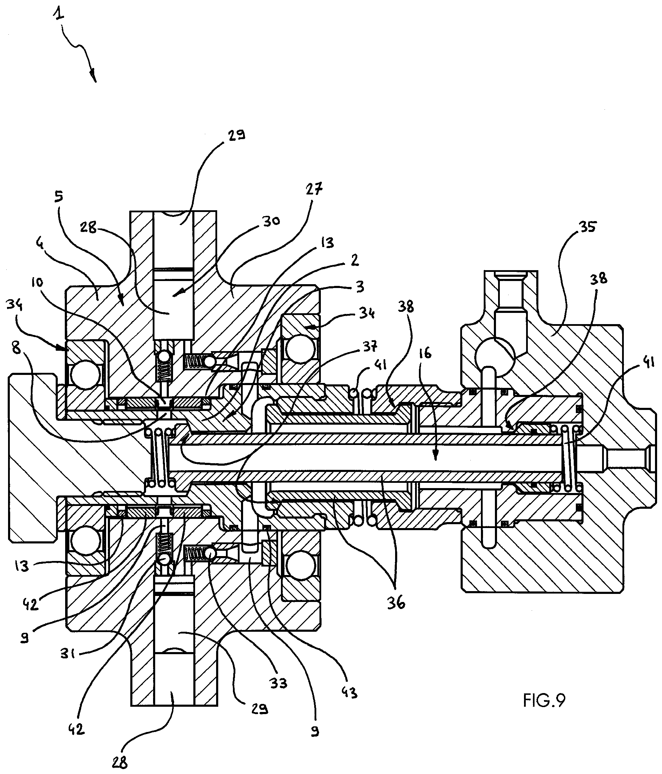

Figure 9 est une vue en coupe schématique d'une variante du raccord d'étanchéité tournant haute-pression a bague continue extensible suivant l'invention selon laquelle le corps d'alimentation femelle forme un rotor de pompe hydraulique d'une pompe hydraulique à pistons tandis que le connecteur hydraulique mâle comporte deux conduits internes de fluide de connecteur mâle cependant que le connecteur hydraulique femelle comporte deux conduits internes de fluide de connecteur femelle.

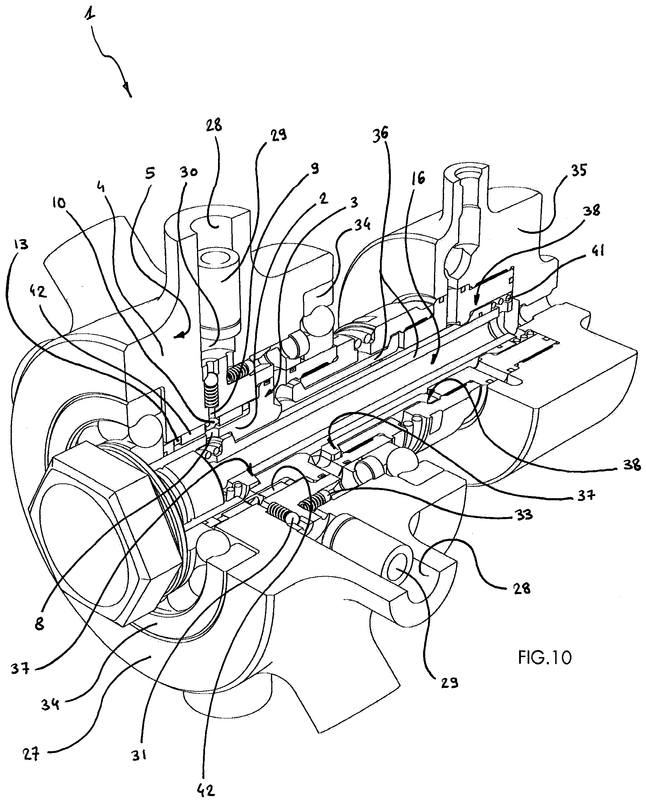

Figure 10 est une vue tridimensionnelle en écorché de la variante du raccord d'étanchéité tournant haute-pression a bague continue extensible suivant l'invention telle qu'illustrée en figure 8.

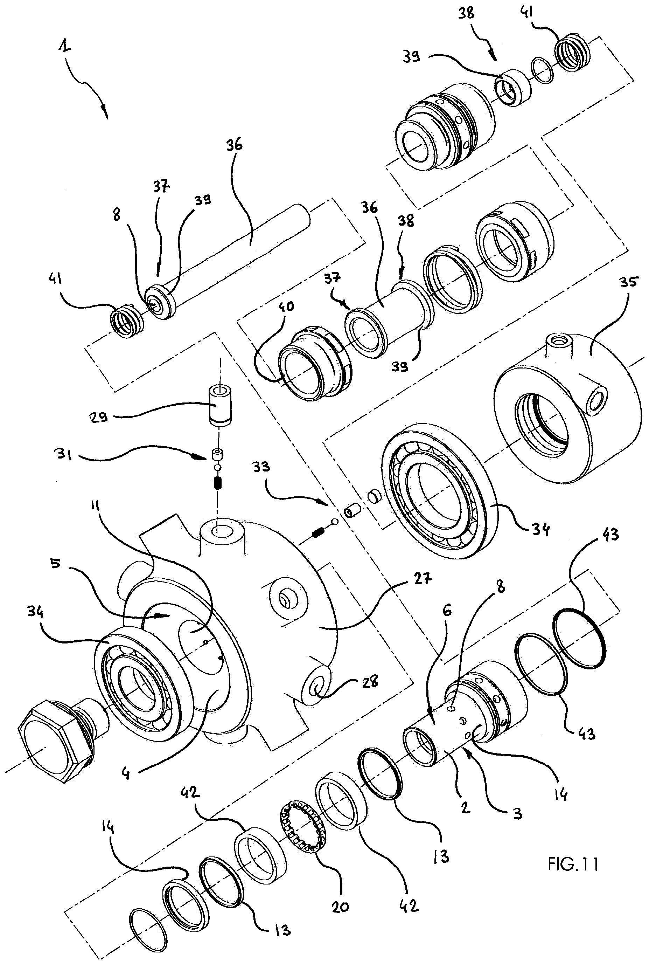

Figure 11 est une vue tridimensionnelle éclatée de la variante du raccord d'étanchéité tournant haute-pression a bague continue extensible suivant l'invention telle qu'illustrée en figure 8.

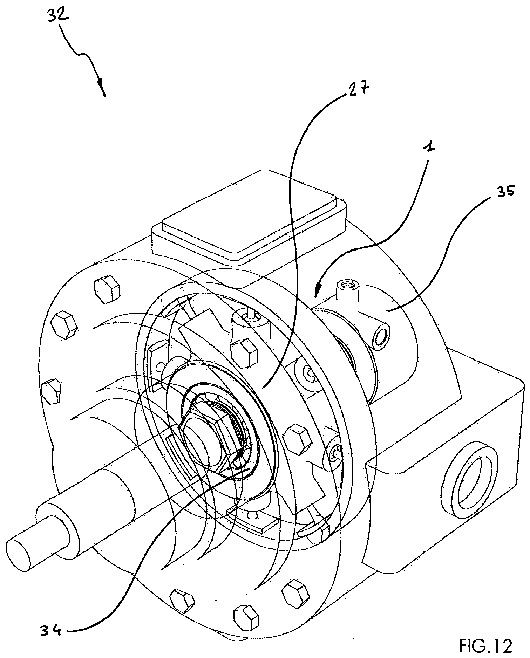

Figure 12 est une vue fantôme tridimensionnelle d'une pompe hydraulique à pistons comprenant le raccord d'étanchéité tournant haute-pression a bague continue extensible suivant l'invention et selon la variante illustrée en figure 8.

### DESCRIPTION DE L'INVENTION :

On a montré en figures 1 à 12 le raccord d'étanchéité tournant haute-pression à bague continue extensible 1.

On voit - particulièrement en figures 1 à 4 et 6 à 11 - que le raccord d'étanchéité tournant haute-pression à bague continue extensible 1 suivant l'invention comprend au moins un connecteur hydraulique mâle 2 faisant partie intégrante d'un corps d'alimentation mâle 3 et un connecteur hydraulique femelle 4 qui fait partie intégrante d'un corps d'alimentation femelle 5, lesdits connecteurs 2, 4 étant coaxiaux tandis que le connecteur hydraulique mâle 2 est logé à l'intérieur du connecteur hydraulique femelle 4 et peut tourner par rapport à ce denier selon un axe longitudinal commun aux deux dits connecteurs 2, 4, cependant que le connecteur hydraulique mâle 2 présente une face de connexion mâle 6 qui fait face à une face de connexion femelle 7 que comporte le connecteur hydraulique femelle 4, lesdites faces de connexion 6, 7 étant principalement des formes de révolution.

Toujours en figures 1 à 4 et 6 à 11, on note que le raccord d'étanchéité tournant haute-pression à bague continue extensible 1 selon l'invention comprend au moins un conduit interne de fluide de connecteur mâle 8 aménagé à l'intérieur du connecteur hydraulique mâle 2, dans lequel peut circuler un fluide 16, et dont l'une des extrémités débouche dans une chambre de communication 10 aménagée dans le corps d'alimentation femelle 5 et/ou le corps d'alimentation mâle 3 tandis que l'autre extrémité dudit conduit interne 8 peut déboucher radialement, axialement ou en un point quelconque du corps d'alimentation mâle 3.

Les mêmes figures montrent également que ledit raccord d'étanchéité 1 comprend au moins un conduit interne de fluide de connecteur femelle 9 aménagé à l'intérieur du connecteur hydraulique femelle 4, dans lequel peut circuler le fluide 16, et dont l'une des extrémités débouche dans la chambre de communication 10 tandis que l'autre extrémité dudit conduit interne 9 peut déboucher radialement, axialement ou en un point quelconque du corps d'alimentation femelle 4.

Les figures 1 à 4 et 6 à 11 montrent aussi clairement que le ledit raccord d'étanchéité 1 comporte au moins un tronçon cylindrique femelle d'étanchéité 11 aménagé sur la face de connexion femelle 7 et/ou un tronçon cylindrique mâle d'étanchéité 21 aménagé sur la face de connexion mâle 6.

On distingue aussi sur les figures 1 à 4 et 6 à 11 que le raccord d'étanchéité tournant haute-pression à bague continue extensible 1 selon l'invention comporte au moins une bague d'étanchéité non-extensible 42 qui est montée autour du connecteur hydraulique mâle 2 et qui peut coulisser le long de ce dernier, ladite bague 42 étant logée à faible jeu dans le tronçon cylindrique femelle d'étanchéité 11 et/ou, au moins une bague d'étanchéité non-extensible 42 logée dans le connecteur hydraulique femelle 4 et qui peut translater longitudinalement à l'intérieur de ce dernier, ladite bague 42 étant montée à faible jeu autour du tronçon cylindrique mâle d'étanchéité 21.

Toujours sur les mêmes figures à laquelle s'ajoute la figure 5, on voit que ledit raccord d'étanchéité 1 comporte au moins une bague continue extensible 13 de forme annulaire continue, intercalée axialement entre la bague d'étanchéité non-extensible 42 et un épaulement d'appui annulaire de bague 14 aménagé ou rapporté sur la face de connexion mâle 6 ou sur la face de connexion femelle 7, ladite bague continue 13 comprenant soit, une face cylindrique interne de bague extensible 15 pouvant être soumise à la pression du fluide 16 contenu dans la chambre de communication 10 via un canal de transmission de pression 12 de sorte qu'une face cylindrique externe de bague extensible 17 que comporte ladite bague continue 13 entre en contact sur toute sa circonférence extérieure avec le tronçon cylindrique femelle d'étanchéité 11, soit une face cylindrique externe de bague extensible 17 pouvant être soumise à la pression du fluide 16 contenu dans la chambre de communication 10 via un canal de transmission de pression 12 de sorte qu'une face cylindrique interne de bague extensible 15 que comporte ladite bague continue 13 entre en contact sur toute sa circonférence intérieure avec le tronçon cylindrique mâle d'étanchéité 21, ladite bague continue extensible 13 comportant une face axiale coté bague non-extensible 18 maintenue directement ou indirectement en contact étanche avec la bague d'étanchéité non-extensible 42 et une face axiale coté épaulement d'appui 19 maintenue directement ou indirectement en contact étanche avec l'épaulement d'appui annulaire de bague 14.

On note que le canal de transmission de pression 12 peut être aménagé à l'intérieur ou à l'extérieur de la bague d'étanchéité non-extensible 42 et/ou ou dans le corps d'alimentation mâle 3 ou dans le corps d'alimentation femelle 5. On note également que la face cylindrique interne de bague extensible 15 et/ou la face cylindrique externe de bague extensible 17 peut coopérer avec au moins un joint d'étanchéité circulaire en matériau souple pour directement ou indirectement réaliser une étanchéité la plus poussée possible entre la bague continue extensible 13 et la bague d'étanchéité non-extensible 42 et/ou l'épaulement d'appui annulaire de bague 14.

Enfin, le raccord d'étanchéité tournant haute-pression à bague continue extensible 1 selon l'invention comporte au moins un ressort de bague non-extensible 20 visible en figures 1 à 4 et 6 à 11 et qui tend à rapprocher la bague d'étanchéité non-extensible 42 de l'épaulement d'appui annulaire de bague 14, et à comprimer axialement la bague continue extensible 13, ledit ressort 20 pouvant être une ou plusieurs rondelles « Belleville », une rondelle élastique quel qu'en soit le type, ou pouvant être hélicoïdal, à lame, de torsion, de traction, de compression, ou de tout type connu de l'homme de l'art. On note également que ledit ressort 20 peut être une forme de révolution en métal ou en tout autre matériau, ajourée pour par exemple laisser passer le fluide 16 au travers d'évidements, ou non-ajourée.

On note que la portion de longueur axiale de la face cylindrique interne de bague extensible 15 qui est la plus proche de l'épaulement d'appui annulaire de bague 14 peut être en moyenne d'un diamètre plus petit que la portion de longueur axiale de ladite face cylindrique 15 qui est la plus proche de la bague d'étanchéité non-extensible 42 tandis que la face cylindrique externe de bague extensible 17 peut rester pour sa part approximativement de même diamètre sur toute sa longueur axiale, et ceci, afin que la bague continue extensible 13 soit sur l'ensemble de sa longueur axiale radialement moins épaisse et moins raide du coté de la bague d'étanchéité non-extensible 42 que du coté de l'épaulement d'appui annulaire de bague 14.

Il faut aussi préciser que la portion de longueur axiale de la face cylindrique externe de bague extensible 17 qui est la plus proche de l'épaulement d'appui annulaire de bague 14 peut être en moyenne d'un plus grand diamètre que la portion de longueur axiale de ladite face cylindrique 17 qui est la plus proche de la bague d'étanchéité non-extensible 42 tandis que la face cylindrique interne de bague extensible 15 reste pour sa part approximativement de même diamètre sur toute sa longueur axiale de sorte que la bague continue extensible 13 est sur l'ensemble de sa longueur axiale radialement moins épaisse et moins raide du coté de la bague d'étanchéité non-extensible 42 que du coté de l'épaulement d'appui annulaire de bague 14.

Il est bien visible en figure 5 qu'une ligne de contact circonférentielle externe 22 peut être aménagée en protubérance sur la face cylindrique externe de bague extensible 17, ladite ligne 22 étant excentrée sur la longueur axiale de la bague continue extensible 13 en direction de la bague d'étanchéité non-extensible 42 de sorte que du coté de ladite ligne 2 orienté en direction de l'épaulement d'appui annulaire de bague 14 soit constituée une pente longue de faible inclinaison 23, tandis que du coté de ladite ligne 22 orienté en direction de la bague d'étanchéité non-extensible 42 est constituée une pente courte de forte inclinaison 24.

En alternative montrée en figures 3 et 4, une ligne de contact circonférentielle interne 25 peut être aménagée en protubérance sur la face cylindrique interne de bague extensible 15, ladite ligne 25 étant excentrée sur la longueur axiale de la bague continue extensible 13 en direction de la bague d'étanchéité non-extensible 42 de sorte que du coté de ladite ligne 2 orienté en direction de l'épaulement d'appui annulaire de bague 14 soit constituée une pente longue de faible inclinaison 23, tandis que du coté de ladite ligne 22 orienté en direction de la bague d'étanchéité non-extensible 42 est constituée une pente courte de forte inclinaison 24.

On peut préciser ici que la bague continue extensible 3, la bague d'étanchéité non-extensible 42 ou l'épaulement d'appui annulaire de bague 14 peuvent être en tout on partie nitrurés, cémentés et/ou revêtus de DLC « Diamond-like-Carbon » ou de tout autre revêtement dur et/ou à bas coefficient de frottement.

On note par ailleurs que la face cylindrique externe de bague extensible 17 et/ou la face cylindrique interne de bague extensible 15 peut présenter un profil en bombé comme montré en figure 5, en simple pente, en double pente, en épaulement, de forme complexe ou de toute géométrie applicable aux segments en général et permettant d'une part, de contrôler la pression de contact entre la face cylindrique externe de bague extensible 17 et le tronçon cylindrique femelle d'étanchéité 11 ou entre la face cylindrique interne de bague extensible 15 et le tronçon cylindrique mâle d'étanchéité 21, et permettant d'autre part, de contrôler l'épaisseur du film d'huile formé entre lesdites faces 17, 15 et lesdites tronçons 11, 21, ou les mouvements de torsion, de basculement ou de flexion de la bague continue extensible 3.

La figure 5 montre aussi que la face axiale coté bague non-extensible 18 et/ou la face axiale coté épaulement d'appui 19 peut comporter une protubérance annulaire axiale 26 permettant de réduire la surface de contact soit entre la face axiale coté bague non-extensible 18 et la bague d'étanchéité non-extensible 42, soit entre la face axiale coté épaulement d'appui 19 et l'épaulement d'appui annulaire de bague 14 soit les deux et ceci, afin de garantir la meilleure étanchéité possible entre ces différents composants mis en contact les uns avec les autres.

En outre, le profil de la face cylindrique interne de bague extensible 15 ou celui de la face cylindrique externe de bague extensible 17 peut être prévu en biseau pour permettre à la bague continue extensible 13 de se rétracter rapidement sous l'effet d'un équilibrage des pressions auxquelles sont soumise lesdites faces 15, 17 de part et d'autre de la ligne que forme leur contact respectivement avec le tronçon cylindrique mâle d'étanchéité 21 et avec le tronçon cylindrique femelle d'étanchéité 11.

Les figures 9 à 12 montrent que le raccord d'étanchéité tournant haute-pression à bague continue extensible 1 selon l'invention prévoit que le corps d'alimentation femelle 5 ou le corps d'alimentation mâle 3 peut former un rotor de pompe hydraulique 27 pour une pompe hydraulique à pistons 32, ledit rotor 27 comportant au moins un cylindre hydraulique 28 dans lequel un piston hydraulique 29 peut alternativement translater longitudinalement et de façon étanche de sorte à former avec ledit cylindre 28 une chambre à huile de pompe 30 de volume variable qui peut aspirer ou refouler le fluide 16, ladite chambre à huile 30 étant reliée à la chambre de communication 10 par le conduit interne de fluide de connecteur femelle 9 ou le conduit interne de fluide de connecteur mâle 8 via un clapet de refoulement de pompe 31 ce dernier permettant au fluide 16 de sortir de la chambre à huile de pompe 30 pour aller vers la chambre de communication 10 mais non l'inverse, tandis que la chambre à huile de pompe 30 peut comporter également un clapet d'admission de pompe 33 qui permet au fluide 16 d'entrer dans ladite chambre à huile 30, mais non d'en sortir.

On note que le cylindre hydraulique 28 peut être placé dans le rotor de pompe hydraulique 27 radialement, axialement, tangentiellement ou dans toute autre orientation réalisable par l'homme de l'art.

On remarque en figures 1 à 4 et 9 à 11 que le connecteur hydraulique mâle 2 peut être maintenu centré dans le connecteur hydraulique femelle 4 et articulé par rapport à ce dernier par au moins un palier de connecteur 34 qui peut être un palier hydrodynamique ou hydrostatique, un roulement à billes ou à rouleaux quel qu'en soit le type, un palier à gaz ou magnétique ou tout autre palier connu de l'homme de l'art.

En figures 9 à 11, on voit que le conduit interne de fluide de connecteur mâle 8 et/ou le conduit interne de fluide de connecteur femelle 9 peut être relié à un corps de raccordement 35 par l'intermédiaire d'au moins un conduit externe de raccordement 36 qui est arrimé par une première extrémité, au corps d'alimentation mâle 3 ou au corps d'alimentation femelle 5 au moyen d'une liaison rotule étanche de corps d'alimentation 37 et par une deuxième extrémité, au corps de raccordement 35 au moyen d'une liaison rotule étanche de corps de raccordement 38.

Les mêmes figures illustrent que la liaison rotule étanche de corps d'alimentation 37 et/ou la liaison rotule étanche de corps de raccordement 38 peut notamment être constituée d'une portée-rotule obturatrice troncosphérique 39 que comporte le conduit externe de raccordement 36, ladite portée-rotule 39 reposant sur un siège de rotule obturatrice 40 aménagé soit dans le corps d'alimentation mâle 3 ou dans le corps d'alimentation femelle 5 s'agissant de la première extrémité du conduit externe de raccordement 36, soit dans le corps de raccordement 35 s'agissant de la deuxième extrémité dudit conduit externe 36.

Toujours en figures 9 à 11, on remarque que la portée-rotule obturatrice troncosphérique 39 peut être soit montée fixement sur le conduit externe de raccordement 36, soit constituer avec ce dernier une liaison glissante étanche ou une liaison pivot-glissant étanche de sorte que ladite portée-rotule 39 peut coulisser le long dudit conduit 36.

On note que si le conduit externe de raccordement 36 comporte une portée-rotule obturatrice troncosphérique 39 montée fixement à chacune de ses extrémités, ledit conduit externe 36 tient le corps de raccordement 35 à une distance constante par rapport au corps d'alimentation mâle 3 ou au corps d'alimentation femelle 5 et notamment, ledit conduit externe 36 empêche que le corps de raccordement 35 ne s'éloigne du corps d'alimentation mâle 3 ou du corps d'alimentation femelle 5 sous l'effet de la pression du fluide 16.

On voit aussi en figures 9 à 11 que la portée-rotule obturatrice troncosphérique 39 peut être directement ou indirectement maintenue au contact du siège de rotule obturatrice 40 par un ressort de portée-rotule 41, ledit ressort 41 pouvant être une ou plusieurs rondelles « Belleville », une rondelle élastique quel qu'en soit le type, ou pouvant être hélicoïdal, à lame, de torsion, de traction, de compression, ou de tout type connu de l'homme de l'art.

Enfin, on note que l'extrémité longitudinale de la bague d'étanchéité non-extensible 42 qui est maintenue en contact étanche avec la face axiale coté bague non-extensible 18 peut présenter un profil tronconique ou troncosphérique réalisé en creux ou en saillie de sorte qu'un léger désalignement axial entre la bague d'étanchéité non-extensible 42 et la bague continue extensible 13 ne puisse pas générer de fuite de fluide 16 à l'interface de ladite bague d'étanchéité non-extensible 42 et de ladite bague continue extensible 13.

### FONCTIONNEMENT DE L'INVENTION :

A partir de la description qui précède et en relation avec les figures 1 à 12, on comprend le fonctionnement du raccord d'étanchéité tournant haute-pression à bague continue extensible 1 suivant la présente invention.

Pour illustrer le fonctionnement dudit raccord 1, prenons-en la configuration montrée en figures 1 et 2 qui prévoit que la face de connexion femelle 7 comporte un tronçon cylindrique femelle d'étanchéité 11 dans lequel la bague d'étanchéité non-extensible 42 est logée à faible jeu de même que la bague continue extensible 13, la face cylindrique externe de bague extensible 17 que comporte ladite bague continue 13 étant prévue pour pouvoir sous certaines conditions entrer en contact sur toute sa circonférence extérieure avec ledit tronçon cylindrique femelle 11.

Toujours en relation avec les figures 1 et 2, supposons qu'il soit ici question d'étancher un fluide 16 mis sous très haute pression - de l'ordre de deux-mille bars - le corps d'alimentation femelle 5 tournant par exemple à quelques centaines de tours par minute tandis que le corps d'alimentation mâle 3 est maintenu fixe. Selon l'exemple qu'illustrent les figures 1 et 2, la liaison tournante entre le corps d'alimentation femelle 5 et le corps d'alimentation mâle 3, est constituée du palier de connecteur 34.

On suppose que le fluide 16 sous pression arrive par le corps d'alimentation mâle 3 via le conduit interne de fluide de connecteur mâle 8, ledit fluide 16 débouchant ensuite dans la chambre de communication 10 avant de ressortir de cette dernière via le conduit interne de fluide de connecteur femelle 9 que comporte le corps d'alimentation femelle 5.

Il est ici question d'assurer - malgré la pression élevée de deux-mille bars - une étanchéité la plus poussée possible entre le corps d'alimentation femelle 5 et le corps d'alimentation mâle 3 qui tournent l'un par rapport à l'autre, et ceci, avec le moins de pertes par frottement possible. Un autre objectif est de garantir ladite étanchéité sur le plus grand nombre possible de tours, ces derniers pouvant se compter en centaines de millions voire en milliards.

Selon l'exemple de réalisation non-limitatif du raccord d'étanchéité tournant haute-pression à bague continue extensible 1 suivant l'invention exposé en figures 1 et 2, on a choisi d'opérer une bague continue extensible 13 de configuration similaire à celle illustrée en figure 5 et que l'on retrouve en coupe schématique en figures 6 à 8. Ces dernières figures permettent aisément d'illustrer le fonctionnement de ladite bague continue 13, laquelle coopère avec la bague d'étanchéité non-extensible 42.

La figure 6 représente l'état de la bague continue extensible 13 lorsque aucune pression ne règne dans le conduit interne de fluide de connecteur mâle 8, dans la chambre de communication 10, et dans le conduit interne de fluide de connecteur femelle 9.

On remarque en figure 6 que la bague continue extensible 13 est maintenue axialement serrée entre la bague d'étanchéité non-extensible 42 et l'épaulement d'appui annulaire de bague 14 par le ressort de bague non-extensible 20. Comme la bague continue extensible 13 comporte sur sa face axiale coté bague non-extensible 18 et sur sa face axiale coté épaulement d'appui 19 une protubérance annulaire axiale 26, une étanchéité axiale relativement poussée est réalisée entre ladite bague continue 13 et la bague d'étanchéité non-extensible 42 d'une part, et entre ladite bague continue 13 et l'épaulement d'appui annulaire de bague 14 d'autre part.

Ladite étanchéité poussée provient notamment de l'effort exercé axialement par le ressort de bague non-extensible 20 sur la bague continue extensible 13. Cet effort est modéré et pourtant, la pression du contact entre la protubérance annulaire axiale 26 et la bague d'étanchéité non-extensible 42 d'une part, et l'épaulement d'appui annulaire de bague 14 d'autre part est élevée vu la faible surface de contact que présente ladite protubérance 26. C'est cette pression de contact élevée qui garantit ladite étanchéité poussée.

Toujours en figure 6, on voit qu'un faible jeu radial est laissé entre la bague d'étanchéité non-extensible 42 et le tronçon cylindrique femelle d'étanchéité 11. Ce jeu peut être en pratique de quelques microns. On note qu'un jeu radial de même ordre de grandeur est laissé entre la bague continue extensible 13 et ledit tronçon cylindrique 11. On note également que la bague d'étanchéité non-extensible 42 et la bague continue extensible 13 sont guidées radialement uniquement par le tronçon cylindrique femelle d'étanchéité 11.

La figure 7 illustre ce qui se passe lorsque le raccord d'étanchéité tournant haute-pression à bague continue extensible 1 suivant l'invention est soumis à une pression intermédiaire moyenne, par exemple de mille bars.

La pression qui règne dans la chambre de communication 10 s'établit instantanément dans le canal de transmission de pression 12 de sorte que la face cylindrique interne de bague extensible 15 est tout aussi instantanément soumise à ladite pression par l'intermédiaire du fluide 16.

Parallèlement à cela, le faible jeu radial laissé entre la bague d'étanchéité non-extensible 42 et le tronçon cylindrique femelle d'étanchéité 11 induit une chute de pression du fluide 16 d'autant plus importante que ce dernier est fortement engagé dans l'interstice laissé entre ladite bague d'étanchéité 42 et ledit tronçon cylindrique 11. Ainsi, la pression trouvée au dessus de la face cylindrique externe de bague extensible 17 est proche de la pression atmosphérique.

Il résulte de ceci une forte différence de pression entre la face cylindrique interne de bague extensible 15 et la face cylindrique externe de bague extensible 17. Cette différence de pression fait augmenter le diamètre de la bague continue extensible 13, cette dernière étant en acier qui, par nature, est élastique.

Le diamètre de la bague continue extensible 13 augmente donc jusqu'à ce que la ligne de contact circonférentielle externe 22 que présente la face cylindrique externe de bague extensible 17 de ladite bague 13 entre en contact avec le tronçon cylindrique femelle d'étanchéité 11, ce qui réalise une étanchéité entre ladite ligne 22 et ledit tronçon 11. Une fois ce contact établi, il ne subsiste plus aucun passage au fluide 16 pour fuir du raccord d'étanchéité tournant haute-pression à bague continue extensible 1 suivant l'invention.

On comprend que l'effort exercé au niveau du contact entre la ligne de contact circonférentielle externe 22 et le tronçon cylindrique femelle d'étanchéité 11 résulte de l'effort exercé par le fluide 16 sur la face cylindrique interne de bague extensible 15 minoré de l'effort de constriction de la bague continue extensible 13 résultant de la raideur de cette dernière, ladite raideur traduisant la résistance à la déformation de ladite bague 13.

On note en figure 5 que le profil de bague continue extensible 13 comporte une pente longue de faible inclinaison 23 destinée à être orientée en direction de l'épaulement d'appui annulaire de bague 14 et une pente courte de forte inclinaison 24 prévue pour être orientée en direction de la bague d'étanchéité non-extensible 42 tandis que la ligne de contact circonférentielle externe 22 est approximativement localisée à la jonction de ces deux dites pentes 23, 24.

Cette configuration particulière permet d'exposer une section suffisante à la pression du fluide 16 pour que la bague continue extensible 13 reste en extension diamétrale malgré le contact établi entre la ligne de contact circonférentielle externe 22 et le tronçon cylindrique femelle d'étanchéité 11.

En figure 8, on a représenté la situation telle que rencontrée lorsque la pression du fluide 16 a atteint par exemple deux-mille bars. Sous une telle pression, la section longitudinale de la bague continue extensible 13 exposée à ladite pression par la pente longue de faible inclinaison 23 tend à faire basculer sur sa section transversale la bague continue extensible 13. Ceci a pour effet de réduire la section longitudinale exposée par la bague continue extensible 13 à la pression de sorte à réduire l'effort excédentaire appliqué par la ligne de contact circonférentielle externe 22 sur le tronçon cylindrique femelle d'étanchéité 11, ledit effort excédentaire étant inutile pour atteindre le niveau d'étanchéité recherché. En effet, en pivotant sur elle même, la section transversale de la bague continue extensible 13 tend à réduire la longueur effective de la pente longue de faible inclinaison 23 et donc, la section longitudinale effective de la bague continue extensible 13 exposée à la pression du fluide 16.

On peut remarquer que selon cet exemple d'agencement prévu par le raccord d'étanchéité tournant haute-pression à bague continue extensible 1 suivant l'invention, il est possible de calculer le profil de section transversale de la bague continue extensible 13 pour trouver - quelle que soit la pression du fluide 16 contenu dans la chambre de communication 10 - le meilleur compromis possible entre étanchéité, pression de contact et effort de contact.

Ceci permet de minimiser les pertes par frottement survenant au niveau du contact entre la ligne de contact circonférentielle externe 22 et le tronçon cylindrique femelle d'étanchéité 11, tout en maintenant l'étanchéité au niveau recherché.

On remarque également que la bague continue extensible 13 étant métallique, elle est naturellement résistante à l'abrasion et peut assurer un service durable et de qualité constante, sous réserve que le fluide 16 ne soit pas trop fortement corrosif et/ou abrasif. Pour améliorer encore sa résistance à l'abrasion et son efficacité énergétique, ladite bague continue 13 peut être en tout on partie nitrurée, cémentée et/ou revêtue de DLC « Diamond-like-Carbon » ou de tout autre revêtement dur et/ou à bas coefficient de frottement. Ladite bague continue 13 peut aussi - selon certaines applications - recevoir un traitement anticorrosion.

En figures 9 à 12, on a montré le raccord d'étanchéité tournant haute-pression à bague continue extensible 1 suivant l'invention mis au service d'une pompe hydraulique à pistons 32 équipée de pistons hydrauliques 29 placés radialement dans un rotor de pompe hydraulique 27 que forme le corps d'alimentation femelle 5.

On voit que dans ce cas, le raccord d'étanchéité tournant haute-pression à bague continue extensible 1 suivant l'invention contribue à la réalisation d'une pompe hydraulique à pistons 32 à haute performance énergétique car elle ne présente aucune fuite significative de fluide 16 au niveau dudit raccord 1.

Selon cet exemple, une pression de l'ordre de deux-mille bars peut également être prévue à étancher entre le corps d'alimentation femelle 5 et le corps d'alimentation mâle 3 tandis que sont prévues deux bagues continues extensibles 13 et deux bagues d'étanchéité non-extensibles 42 montées de façon axisymétrique de part et d'autre d'un ressort de bague non-extensible 20 commun aux deux bagues d'étanchéité non-extensibles 42.

On peut noter que le raccord d'étanchéité tournant haute-pression à bague continue extensible 1 suivant l'invention coopère avec des joints à lèvre 43 qui assurent l'étanchéité tournante de l'arrivée basse-pression d'alimentation de la pompe hydraulique 27.

Toujours selon cet exemple, le raccord d'étanchéité tournant haute-pression à bague continue extensible 1 comprend deux paliers de connecteur 34 prenant la forme de roulements à billes.

On remarque que l'admission de fluide 16 à basse pression de chaque cylindre hydraulique 28 de la pompe hydraulique 27 s'opère par l'intermédiaire d'un clapet d'admission de pompe 33 tandis que ledit fluide 16 est expulsé desdits cylindres par un clapet de refoulement de pompe 31.

Ainsi, la pompe hydraulique 27 se comporte comme une roue libre et récupère naturellement la quasi totalité de l'énergie de compressibilité du fluide 16, ce qui contribue grandement à sa haute performance énergétique.

On note que le corps d'alimentation mâle 3 est raccordé à un corps de raccordement 35 monté fixe par rapport à la pompe hydraulique à pistons 32 par l'intermédiaire de conduits externes de raccordement 36, le plus petit étant dédié à la haute pression tandis que le plus grand est dédié à la basse pression.

On remarque que les conduits externes de raccordement 36 sont terminés par une liaison rotule étanche de corps d'alimentation 37 du coté de la pompe hydraulique 27, et par une liaison rotule étanche de corps de raccordement 38 du coté du corps de raccordement 35. Cette configuration particulière autorise les micromouvements dans toutes les directions et dans tous les sens de rotation entre le corps d'alimentation mâle 3 et le corps de raccordement 35, une telle liberté étant rendue nécessaire par les déformations sous charge, les imprécisions d'usinage et les jeux de fonctionnement auxquels est soumise la pompe hydraulique à pistons 32.

On remarque que les deux portées-rotules obturatrices troncosphériques 39 du conduit externe de raccordement 36 dédié à la basse pression sont montées fixement sur ledit conduit 36 afin de tenir le corps de raccordement 35 à une distance constante par rapport au corps d'alimentation mâle 3 malgré l'effort généré par la pression du fluide 16. Par ailleurs, on remarque que la portée-rotule obturatrice troncosphériques 39 du conduit externe de raccordement 36 dédié à la haute pression qui est placée du coté du corps d'alimentation mâle 3 est montée fixement sur ledit conduit 36 tandis que la portée-rotule obturatrice troncosphériques 39 opposée montée sur le même dit conduit 36 constitue avec ce dernier une liaison pivot-glissant étanche.

Ces exemples d'application du raccord d'étanchéité tournant haute-pression à bague continue extensible 1 permettent aisément d'en transposer l'usage à d'autres applications qu'il s'agisse de pompes hydrauliques ou de toute autre machine, sans limitation. Lesdites autres applications peuvent ainsi trouver avec ledit raccord 1 selon l'invention une solution pour prévenir toute fuite significative de fluide liquide ou gazeux entre deux pièces tournant de manière continue ou alternative l'une par rapport à l'autre.

## Revendications

1. Raccord d'étanchéité tournant haute-pression à bague continue extensible (1) comprenant:
• Au moins un connecteur hydraulique mâle (2) faisant partie intégrante d'un corps d'alimentation mâle (3) et un connecteur hydraulique femelle (4) qui fait partie intégrante d'un corps d'alimentation femelle (5), lesdits connecteurs (2, 4) étant coaxiaux tandis que le connecteur hydraulique mâle (2) est logé à l'intérieur du connecteur hydraulique femelle (4) et peut tourner par rapport à ce denier selon un axe longitudinal commun aux deux dits connecteurs (2, 4), cependant que le connecteur hydraulique mâle (2) présente une face de connexion mâle (6) qui fait face à une face de connexion femelle (7) que comporte le connecteur hydraulique femelle (4), lesdites faces de connexion (6, 7) étant principalement des formes de révolution ;
• Au moins un conduit interne de fluide de connecteur mâle (8) aménagé à l'intérieur du connecteur hydraulique mâle (2), dans lequel peut circuler un fluide (16), et dont l'une des extrémités débouche dans une chambre de communication (10) aménagée dans le corps d'alimentation femelle (5) et/ou le corps d'alimentation mâle (3) ;
• Au moins un conduit interne de fluide de connecteur femelle (9) aménagé à l'intérieur du connecteur hydraulique femelle (4), dans lequel peut circuler le fluide (16), et dont l'une des extrémités débouche dans la chambre de communication (10) ;
• Au moins un tronçon cylindrique femelle d'étanchéité (11) aménagé sur la face de connexion femelle (7) et/ou un tronçon cylindrique mâle d'étanchéité (21) aménagé sur la face de connexion mâle (6) ;
• Au moins une bague d'étanchéité non-extensible (42) montée autour du connecteur hydraulique mâle (2) et qui peut coulisser le long de ce dernier, ladite bague (42) étant logée à faible jeu dans le tronçon cylindrique femelle d'étanchéité (11) et/ou, au moins une bague d'étanchéité non-extensible (42) logée dans le connecteur hydraulique femelle (4) et qui peut translater longitudinalement à l'intérieur de ce dernier, ladite bague (42) étant montée à faible jeu autour du tronçon cylindrique mâle d'étanchéité (21) ;
• Au moins une bague continue extensible (13) de forme annulaire continue, intercalée axialement entre la bague d'étanchéité non-extensible (42) et un épaulement d'appui annulaire de bague (14) aménagé ou rapporté sur la face de connexion mâle (6) ou sur la face de connexion femelle (7), ladite bague continue (13) comprenant soit, une face cylindrique interne de bague extensible (15) pouvant être soumise à la pression du fluide (16) contenu dans la chambre de communication (10) via un canal de transmission de pression (12) de sorte qu'une face cylindrique externe de bague extensible (17) que comporte ladite bague continue (13) entre en contact sur toute sa circonférence extérieure avec le tronçon cylindrique femelle d'étanchéité (11), soit une face cylindrique externe de bague extensible (17) pouvant être soumise à la pression du fluide (16) contenu dans la chambre de communication (10) via un canal de transmission de pression (12) de sorte qu'une face cylindrique interne de bague extensible (15) que comporte ladite bague continue (13) entre en contact sur toute sa circonférence intérieure avec le tronçon cylindrique mâle d'étanchéité (21), ladite bague continue extensible (13) comportant une face axiale coté bague non-extensible (18) maintenue directement ou indirectement en contact étanche avec la bague d'étanchéité non-extensible (42) et une face axiale coté épaulement d'appui (19) maintenue directement ou indirectement en contact étanche avec l'épaulement d'appui annulaire de bague (14) ;
• Au moins un ressort de bague non-extensible (20) qui tend à rapprocher la bague d'étanchéité non-extensible (42) de l'épaulement d'appui annulaire de bague (14), et à comprimer axialement la bague continue extensible (13).

2. Raccord d'étanchéité suivant la revendication 1, **caractérisé en ce que** la portion de longueur axiale de la face cylindrique interne de bague extensible (15) qui est la plus proche de l'épaulement d'appui annulaire de bague (14) est en moyenne d'un diamètre plus petit que la portion de longueur axiale de ladite face cylindrique (15) qui est la plus proche de la bague d'étanchéité non-extensible (42) tandis que la face cylindrique externe de bague extensible (17) reste pour sa part approximativement de même diamètre sur toute sa longueur axiale.

3. Raccord d'étanchéité suivant la revendication 1, **caractérisé en ce que** la portion de longueur axiale de la face cylindrique externe de bague extensible (17) qui est la plus proche de l'épaulement d'appui annulaire de bague (14) est en moyenne d'un plus grand diamètre que la portion de longueur axiale de ladite face cylindrique (17) qui est la plus proche de la bague d'étanchéité non-extensible (42) tandis que la face cylindrique interne de bague extensible (15) reste pour sa part approximativement de même diamètre sur toute sa longueur axiale.

4. Raccord d'étanchéité suivant la revendication 1, **caractérisé en ce qu'**une ligne de contact circonférentielle externe (22) est aménagée en protubérance sur la face cylindrique externe de bague extensible (17), ladite ligne (22) étant excentrée sur la longueur axiale de la bague continue extensible (13) en direction de la bague d'étanchéité non-extensible (42) de sorte que du coté de ladite ligne (2) orienté en direction de l'épaulement d'appui annulaire de bague (14) soit constituée une pente longue de faible inclinaison (23), tandis que du coté de ladite ligne (22) orienté en direction de la bague d'étanchéité non-extensible (42) est constituée une pente courte de forte inclinaison (24).

5. Raccord d'étanchéité suivant la revendication 1, **caractérisé en ce qu'**une ligne de contact circonférentielle interne (25) est aménagée en protubérance sur la face cylindrique interne de bague extensible (15), ladite ligne (25) étant excentrée sur la longueur axiale de la bague continue extensible (13) en direction de la bague d'étanchéité non-extensible (42) de sorte que du coté de ladite ligne (2) orienté en direction de l'épaulement d'appui annulaire de bague (14) soit constituée une pente longue de faible inclinaison (23), tandis que du coté de ladite ligne (22) orienté en direction de la bague d'étanchéité non-extensible (42) est constituée une pente courte de forte inclinaison (24).

6. Raccord d'étanchéité suivant la revendication 1, **caractérisé en ce que** la face axiale coté bague non-extensible (18) et/ou la face axiale coté épaulement d'appui (19) comporte une protubérance annulaire axiale (26).

7. Raccord d'étanchéité suivant la revendication 1, **caractérisé en ce que** le corps d'alimentation femelle (5) ou le corps d'alimentation mâle (3) forme un rotor de pompe hydraulique (27) pour une pompe hydraulique à pistons (32), ledit rotor (27) comportant au moins un cylindre hydraulique (28) dans lequel un piston hydraulique (29) peut alternativement translater longitudinalement et de façon étanche de sorte à former avec ledit cylindre (28) une chambre à huile de pompe (30) de volume variable qui peut aspirer ou refouler le fluide (16), ladite chambre à huile (30) étant reliée à la chambre de communication (10) par le conduit interne de fluide de connecteur femelle (9) ou le conduit interne de fluide de connecteur mâle (8) via un clapet de refoulement de pompe (31) ce dernier permettant au fluide (16) de sortir de la chambre à huile de pompe (30) pour aller vers la chambre de communication (10) mais non l'inverse, tandis que la chambre à huile de pompe (30) comporte également un clapet d'admission de pompe (33) qui permet au fluide (16) d'entrer dans ladite chambre à huile (30), mais non d'en sortir.

8. Raccord d'étanchéité suivant la revendication 1, **caractérisé en ce que** le connecteur hydraulique mâle (2) est maintenu centré dans le connecteur hydraulique femelle (4) et articulé par rapport à ce dernier par au moins un palier de connecteur (34).

9. Raccord d'étanchéité suivant la revendication 1, **caractérisé en ce que** le conduit interne de fluide de connecteur mâle (8) et/ou le conduit interne de fluide de connecteur femelle (9) est relié à un corps de raccordement (35) par l'intermédiaire d'au moins un conduit externe de raccordement (36) qui est arrimé par une première extrémité, au corps d'alimentation mâle (3) ou au corps d'alimentation femelle (5) au moyen d'une liaison rotule étanche de corps d'alimentation (37) et par une deuxième extrémité, au corps de raccordement (35) au moyen d'une liaison rotule étanche de corps de raccordement (38).

10. Raccord d'étanchéité suivant la revendication 8, **caractérisé en ce que** la liaison rotule étanche de corps d'alimentation (37) et/ou la liaison rotule étanche de corps de raccordement (38) est notamment constituée d'une portée-rotule obturatrice troncosphérique (39) que comporte le conduit externe de raccordement (36), ladite portée-rotule (39) reposant sur un siège de rotule obturatrice (40) aménagé soit dans le corps d'alimentation mâle (3) ou dans le corps d'alimentation femelle (5) s'agissant de la première extrémité du conduit externe de raccordement (36), soit dans le corps de raccordement (35) s'agissant de la deuxième extrémité dudit conduit externe (36).

11. Raccord d'étanchéité suivant la revendication 9, **caractérisé en ce que** la portée-rotule obturatrice troncosphérique (39) est soit montée fixement sur le conduit externe de raccordement (36), soit constitue avec ce dernier une liaison glissante étanche ou une liaison pivot-glissant étanche.

12. Raccord d'étanchéité suivant la revendication 9, **caractérisé en ce que** la portée-rotule obturatrice troncosphérique (39) est directement ou indirectement maintenue au contact du siège de rotule obturatrice (40) par un ressort de portée-rotule (41).

13. Raccord d'étanchéité suivant la revendication 1, **caractérisé en ce que** l'extrémité longitudinale de la bague d'étanchéité non-extensible (42) qui est maintenue en contact étanche avec la face axiale coté bague non-extensible (18) présente un profil tronconique ou troncosphérique réalisé en creux ou en saillie.

## Patentansprüche

1. Rotierender Hochdruckdichtungsstopfen mit expandierbarem durchgehendem Ring (1), umfassend:
• Mindestens einen Hydraulikverbindungsstecker (2), der fester Bestandteil eines eingreifenden Versorgungskörpers (3) ist, und eine Hydrauliksteckbuchse (4), die fester Bestandteil eines aufnehmenden Versorgungskörpers (5) ist, wobei die Steckverbinder (2, 4) koaxial sind, während der Hydraulikverbindungsstecker (2) innerhalb der Hydrauliksteckbuchse (4) aufgenommen ist und sich bezogen auf diese gemäß einer gemeinsamen Längsachse der zwei Steckverbinder (2, 4) drehen kann, wobei der Hydraulikverbindungsstecker (2) eine eingreifende Verbindungsseite (6) aufweist, die einer aufnehmenden Verbindungsseite (7) gegenüberliegt, die die Hydrauliksteckbuchse (4) aufweist, wobei die Verbindungsseiten (6, 7) hauptsächlich Umdrehungsformen sind;
• Mindestens eine Verbindungsstecker-Innenleitung für Fluid (8), die innerhalb des Hydraulikverbindungssteckers (2) angeordnet ist, in welcher ein Fluid (16) zirkulieren kann, und deren eines Ende in einer Verbindungskammer (10) mündet, die in dem aufnehmenden Versorgungskörper (5) und/oder dem eingreifenden Versorgungskörper (3) angeordnet ist;
• Mindestens eine Steckbuchsen-Innenleitung für Fluid (9), die innerhalb der Hydrauliksteckbuchse (4) angeordnet ist, in welcher das Fluid (16) zirkulieren kann, und deren eines Ende in der Verbindungskammer (10) mündet;
• Mindestens einen aufnehmenden zylindrischen Dichtungsabschnitt (11), der auf der aufnehmenden Verbindungsseite (7) angeordnet ist, und/oder einen eingreifenden zylindrischen Dichtungsabschnitt (21), der auf der eingreifenden Verbindungsseite (6) angeordnet ist,
• Mindestens einen nicht expandierbaren Dichtungsring (42), der um den Hydraulikverbindungsstecker (2) herum angebracht ist, und der entlang desselben gleiten kann, wobei der Ring (42) mit geringem Spiel in dem aufnehmenden zylindrischen Dichtungsabschnitt (11) aufgenommen ist und/oder mindestens ein nicht expandierbarer Dichtungsring (42) in der Hydrauliksteckbuchse (4) aufgenommen ist, und der sich innerhalb derselben in Längsrichtung verschieben kann, wobei der Ring (42) mit geringem Spiel um den eingreifenden zylindrischen Dichtungsabschnitt (21) herum angebracht ist;
• Mindestens einen expandierbaren durchgehenden Ring (13) mit durchgehend ringförmiger Form, der axial zwischen dem nicht expandierbaren Dichtungsring (42) und einer ringförmigen Ringauflageschulter (14) eingefügt ist, die auf der eingreifenden Verbindungsseite (6) oder auf der aufnehmenden Verbindungsseite (7) angeordnet oder aufgesetzt ist, der durchgehende Ring (13) umfassend entweder eine zylindrische Innenseite eines expandierbaren Rings (15), die dem Druck des Fluids (16), das in der Verbindungskammer (10) enthalten ist, über einen Druckübertragungskanal (12) ausgesetzt werden kann, so dass eine zylindrische Außenseite eines expandierbaren Rings (17), die der durchgehende Ring (13) enthält, auf ihrem gesamten Außenumfang mit dem aufnehmenden zylindrischen Dichtungsabschnitt (11) in Kontakt tritt, oder eine zylindrische Außenseite eines expandierbaren Rings (17), die dem Druck des Fluids (16), das in der Verbindungskammer (10) enthalten ist, über einen Druckübertragungskanal (12) ausgesetzt werden kann, so dass eine zylindrische Innenseite eines expandierbaren Rings (15), die der durchgehende Ring (13) enthält, auf ihrem gesamten Innenumfang mit dem eingreifenden zylindrischen Dichtungsabschnitt (21) in Kontakt tritt, wobei der expandierbare durchgehende Ring (13) eine axiale Seite auf der Seite des nicht expandierbaren Rings (18), die direkt oder indirekt in abdichtendem Kontakt mit dem nicht expandierbaren Dichtungsring (42) gehalten wird, und eine axiale Seite auf der Seite der Auflageschulter (19), die direkt oder indirekt in abdichtendem Kontakt mit der ringförmigen Ringauflageschulter (14) gehalten wird, aufweist;
• Mindestens eine Feder eines nicht expandierbaren Rings (20), die den nicht expandierbaren Dichtungsring (42) an die ringförmige Ringauflageschulter (14) annähern und den expandierbaren durchgehenden Ring (13) axial zusammendrücken soll.

2. Dichtungsstopfen nach Anspruch 1, **dadurch gekennzeichnet, dass** der axiale Längenabschnitt der zylindrischen Innenseite eines expandierbaren Rings (15), die der ringförmigen Ringauflageschulter (14) am nächsten gelegen ist, im Durchschnitt einen Durchmesser aufweist, der kleiner als der axiale Längenabschnitt der zylindrischen Seite (15) ist, die dem nicht expandierbaren Dichtungsring (42) am nächsten gelegen ist, während die zylindrische Außenseite eines expandierbaren Rings (17) ihrerseits auf ihrer gesamten axialen Länge ungefähr denselben Durchmesser behält.

3. Dichtungsstopfen nach Anspruch 1, **dadurch gekennzeichnet, dass** der axiale Längenabschnitt der zylindrischen Außenseite eines expandierbaren Rings (17), die der ringförmigen Ringauflageschulter (14) am nächsten gelegen ist, im Durchschnitt einen Durchmesser aufweist, der größer als der axiale Längenabschnitt der zylindrischen Seite (17) ist, die dem nicht expandierbaren Dichtungsring (42) am nächsten gelegen ist, während die zylindrische Innenseite eines expandierbaren Rings (15) ihrerseits auf ihrer gesamten axialen Länge ungefähr denselben Durchmesser behält.

4. Dichtungsstopfen nach Anspruch 1, **dadurch gekennzeichnet, dass** eine äußere Umfangskontaktlinie (22) auf der zylindrischen Außenseite eines expandierbaren Rings (17) hervorstehend angeordnet ist, wobei die Linie (22) exzentrisch auf der axialen Länge des expandierbaren durchgehenden Rings (13) in Richtung des nicht expandierbaren Dichtungsrings (42) verläuft, damit auf der Seite der Linie (2), die in Richtung der ringförmigen Ringauflageschulter (14) orientiert ist, eine lange Schräge schwacher Neigung (23) gebildet wird, während auf der Seite der Linie (22), die in Richtung des nicht expandierbaren Dichtungsrings (42) orientiert ist, eine kurze Schräge starker Neigung (24) gebildet wird.

5. Dichtungsstopfen nach Anspruch 1, **dadurch gekennzeichnet, dass** eine innere Umfangskontaktlinie (25) auf der zylindrischen Innenseite eines expandierbaren Rings (15) hervorstehend angeordnet ist, wobei die Linie (25) exzentrisch auf der axialen Länge des expandierbaren durchgehenden Rings (13) in Richtung des nicht expandierbaren Dichtungsrings (42) verläuft, damit auf der Seite der Linie (2), die in Richtung der ringförmigen Ringauflageschulter (14) orientiert ist, eine lange Schräge schwacher Neigung (23) gebildet wird, während auf der Seite der Linie (22), die in Richtung des nicht expandierbaren Dichtungsrings (42) orientiert ist, eine kurze Schräge starker Neigung (24) gebildet wird.

6. Dichtungsstopfen nach Anspruch 1, **dadurch gekennzeichnet, dass** die axiale Seite auf der Seite des nicht expandierbaren Rings (18) und/oder die axiale Seite auf der Seite der Auflageschulter (19) einen axialen ringförmigen Vorsprung (26) aufweist.

7. Dichtungsstopfen nach Anspruch 1, **dadurch gekennzeichnet, dass** der aufnehmende Versorgungskörper (5) oder der eingreifende Versorgungskörper (3) einen Hydraulikpumpenrotor (27) für eine Kolben-Hydraulikpumpe (32) bildet, wobei der Rotor (27) mindestens einen Hydraulikzylinder (28) aufweist, in dem ein Hydraulikkolben (29) sich abwechselnd in Längsrichtung und abdichtend verschieben kann, um mit dem Zylinder (28) eine Pumpenölkammer (30) variablen Volumens zu bilden, die das Fluid (16) ansaugen oder verdrängen kann, wobei die Ölkammer (30) mit der Verbindungskammer (10) durch die Steckbuchsen-Innenleitung für Fluid (9) oder die Verbindungsstecker-Innenleitung für Fluid (8) über ein Pumpendruckventil (31) verbunden ist, wobei letzteres es dem Fluid (16) ermöglicht, die Pumpenölkammer (30) zu verlassen, um zur Verbindungskammer (10) zu gelangen, aber nicht umgekehrt, während die Pumpenölkammer (30) ebenfalls ein Pumpeneinlassventil (33) aufweist, das es dem Fluid (16) ermöglicht, in die Ölkammer (30) einzutreten, jedoch nicht, diese zu verlassen.

8. Dichtungsstopfen nach Anspruch 1, **dadurch gekennzeichnet, dass** der Hydraulikverbindungsstecker (2) in der Hydrauliksteckbuchse (4) zentriert gehalten wird und in Bezug auf diese durch mindestens ein Steckverbinderlager (34) angelenkt ist.

9. Dichtungsstopfen nach Anspruch 1, **dadurch gekennzeichnet, dass** die Verbindungsstecker-Innenleitung für Fluid (8) und/oder die Steckbuchsen-Innenleitung für Fluid (9) mit einem Anschlusskörper (35) durch mindestens eine äußere Anschlussleitung (36) verbunden ist, die an einem ersten Ende mit dem eingreifenden Versorgungskörper (3) oder dem aufnehmenden Versorgungskörper (5) mittels einer dichten Versorgungskörper-Kugelgelenkverbindung (37) und an einem zweiten Ende mit dem Anschlusskörper (35) mittels einer dichten Anschlusskörper-Kugelgelenkverbindung (38) befestigt ist.

10. Dichtungsstopfen nach Anspruch 8, **dadurch gekennzeichnet, dass** die dichte Versorgungskörper-Kugelgelenkverbindung (37) und/oder die dichte Anschlusskörper-Kugelgelenkverbindung (38) insbesondere von einem verschließenden Kugelgelenk-Traglager mit der Form einer abgeschnittenen Kugel (39) gebildet wird, das die äußere Anschlussleitung (36) aufweist, wobei das Kugelgelenk-Traglager (39) auf einem verschließenden Kugelgelenksitz (40) aufliegt, der entweder in dem eingreifenden Versorgungskörper (3) oder in dem aufnehmenden Versorgungskörper (5) angeordnet ist, wobei es sich um das erste Ende der äußeren Anschlussleitung (36) handelt, oder in dem Anschlusskörper (35), wobei es sich um das zweite Ende der äußeren Anschlussleitung (36) handelt.

11. Dichtungsstopfen nach Anspruch 9, **dadurch gekennzeichnet, dass** das verschließende Kugelgelenk-Traglager mit der Form einer abgeschnittenen Kugel (39) entweder fest auf der äußeren Anschlussleitung (36) angebracht ist oder mit dieser eine dichte Gleitverbindung oder eine dichte Schwenk-Gleitverbindung bildet.

12. Dichtungsstopfen nach Anspruch 9, **dadurch gekennzeichnet, dass** das verschließende Kugelgelenk-Traglager mit der Form einer abgeschnittenen Kugel (39) von einer Kugelgelenk-Traglager-Feder (41) direkt oder indirekt in Kontakt mit dem verschließenden Kugelgelenksitz (40) gehalten wird.

13. Dichtungsstopfen nach Anspruch 1, **dadurch gekennzeichnet, dass** das Ende in Längsrichtung des nicht expandierbaren Dichtungsrings (42), der in abdichtendem Kontakt mit der axialen Seite auf der Seite des nicht expandierbaren Rings (18) gehalten wird, ein Profil mit der Form einer abgeschnittenen Kugel oder eines Kegelstumpfs aufweist, das vertieft oder hervorstehend ausgebildet ist.

## Claims

1. High-pressure rotating sealing coupling with continuous expandable ring (1) comprising:
• at least one male hydraulic connector (2) forming an integral part of a male supply body (3) and a female hydraulic connector (4), which forms an integral part of a female supply body (5), said connectors (2, 4) being coaxial whilst the male hydraulic connector (2) is accommodated within the female hydraulic connector (4) and can rotate relative to the latter along a longitudinal axis common to the two aforesaid connectors (2, 4), while the male hydraulic connector (2) has a male connection face (6) which faces a female connection face (7) located on the female hydraulic connector (4), said connection faces (6, 7) being shapes of revolution in principle;
• at least one male connector internal fluid duct (8) arranged inside the male hydraulic connector (2), in which duct a fluid (16) can circulate and of which one of the ends leads into a communication chamber (10) arranged in the female supply body (5) and/or the male supply body (3);
• at least one female connector internal fluid duct (9) arranged inside the female hydraulic connector (4), in which duct the fluid (16) can circulate and of which one of the ends leads into the communication chamber (10);
• at least one female cylindrical sealing section (11) arranged in the female connection face (7) and/or a male cylindrical sealing section (21) arranged on the male connection face (6);
• at least one non-expandable sealing ring (42) mounted around the male hydraulic connector (2) and which can slide along the latter, said ring (42) being accommodated with little play in the cylindrical female sealing section (11) and/or at least one non-expandable sealing ring (42) accommodated in the female hydraulic connector (4) and which can move in translation longitudinally within the latter, said ring (42) being mounted with little play around the cylindrical male sealing section (21);
• at least one continuous expandable ring (13) of continuous annular form, inserted axially between the non-expandable sealing ring (42) and a ring annular bearing shoulder (14) arranged or connected on the male connection face (6) or on the female connection face (7), said continuous ring (13) comprising either an expandable ring inner cylindrical face (15) that can be subjected to the pressure of the fluid (16) contained in the communication chamber (10) via a pressure transmission channel (12) such that an expandable ring outer cylindrical face (17) located on said continuous ring (13) comes into contact over the entire outer circumference thereof with the cylindrical female sealing section (11), or an expandable ring outer cylindrical face (17) that can be subjected to the pressure of the fluid (16) contained in the communication chamber (10) via a pressure transmission channel (12) such that an expandable ring inner cylindrical face (15) located on said continuous ring (13) comes into contact over the entire inner circumference thereof with the cylindrical male sealing section (21), said continuous expandable ring (13) comprising an axial face on the non-expandable ring (18) side held directly or indirectly in tight contact with the non-expandable sealing ring (42), and an axial face on the bearing shoulder (19) side held directly or indirectly in tight contact with the ring annular bearing shoulder (14);
• at least one non-expandable ring spring (20), which tends to draw the non-expandable sealing ring (42) close to the ring annular bearing shoulder (14) and to axially compress the continuous expandable ring (13).

2. Sealing coupling according to Claim 1, **characterized in that** the axial length portion of the expandable ring inner cylindrical face (15) closer to the ring annular bearing shoulder (14) on average has a diameter smaller than the axial length portion of said cylindrical face (15) closer to the non-expandable sealing ring (42), whereas the expandable ring outer cylindrical face (17) remains for its part approximately with the same diameter over the entire axial length thereof.

3. Sealing coupling according to Claim 1, **characterized in that** the axial length portion of the expandable ring outer cylindrical face (17) closer to the ring annular bearing shoulder (14) on average has a diameter greater than the axial length portion of said cylindrical face (17) closer to the non-expandable sealing ring (42), whereas the expandable ring inner cylindrical face (15) remains for its part approximately with the same diameter over the entire axial length thereof.

4. Sealing coupling according to Claim 1, **characterized in that** an outer circumferential contact line (22) is arranged in a protruding manner on the expandable ring outer cylindrical face (17), said line (22) being eccentric over the axial length of the continuous expandable ring (13) in the direction of the non-expandable sealing ring (42), such that a long slope of gradual incline (23) is formed from said line (2) oriented in the direction of the ring annular bearing shoulder (14), whereas a short slope of steep incline (24) is formed from said line (22) oriented in the direction of the non-expandable sealing ring (42).

5. Sealing coupling according to Claim 1, **characterized in that** an inner circumferential contact line (25) is arranged in a protruding manner on the expandable ring inner cylindrical face (15), said line (25) being eccentric over the axial length of the continuous expandable ring (13) in the direction of the non-expandable sealing ring (42), such that a long slope of gradual incline (23) is formed from said line (2) oriented in the direction of the ring annular bearing shoulder (14), whereas a short slope of steep incline (24) is formed from said line (22) oriented in the direction of the non-expandable sealing ring (42).

6. Sealing coupling according to Claim 1, **characterized in that** the axial face on the non-expandable ring (18) side and/or the axial face on the bearing shoulder (19) side comprises an axial annular protrusion (26).

7. Sealing coupling according to Claim 1, **characterized in that** the female supply body (5) or the male supply body (3) forms a hydraulic pump rotor (27) for a hydraulic piston pump (32), said rotor (27) comprising at least one hydraulic cylinder (28) in which a hydraulic piston (29) can move in translation longitudinally in an alternating manner, moreover tightly so as to form with said cylinder (28) a pump oil chamber (30) of variable volume that can aspirate or deliver the fluid (16), said oil chamber (30) being connected to the communication chamber (10) by the female connector internal fluid duct (9) or the male connector internal fluid duct (8) via a pump delivery valve (31), the latter allowing the fluid (16) to exit the pump oil chamber (30) in order to pass into the communication chamber (10), but not the other way round, whereas the pump oil chamber (30) also has a pump intake valve (33), which allows the fluid (16) to enter said oil chamber (30), but not to exit therefrom.

8. Sealing coupling according to Claim 1, **characterized in that** the male hydraulic connector (2) is held centered in the female hydraulic connector (4) and is hinged relative thereto by at least one connector bearing (34).

9. Sealing coupling according to Claim 1, **characterized in that** the male connector internal fluid duct (8) and/or the female connector internal fluid duct (9) is connected to a connection body (35) by means of at least one outer connection duct (36), which is secured by a first end to the male supply body (3) or to the female supply body (5) by means of a supply body tight ball joint (37) and by a second end to the connection body (35) by means of a connection body tight ball joint (38).

10. Sealing coupling according to Claim 8, **characterized in that** the supply body tight ball joint (37) and/or the connection body tight ball joint (38) is formed in particular by a sealing ball carrier in the form of a truncated sphere (39) located on the outer connection duct (36), said ball carrier (39) resting on a sealing ball seat (40) arranged either in the male supply body (3) or in the female supply body (5) with regard to the first end of the outer connection duct (36) or in the connection body (35) with regard to the second end of said outer duct (36).

11. Sealing coupling according to Claim 9, **characterized in that** the sealing ball carrier in the form of a truncated sphere (39) is either mounted fixedly on the outer connection duct (36), or with the latter forms a tight sliding connection or a tight pivoting and sliding connection.

12. Sealing coupling according to Claim 9, **characterized in that** the sealing ball carrier in the form of a truncated sphere (39) is directly or indirectly held in contact with the sealing ball seat (40) by a ball carrier spring (41).

13. Sealing coupling according to Claim 1, **characterized in that** the longitudinal end of the non-expandable sealing ring (42), which is held in tight contact with the axial face on the non-expandable ring (18) side has a or protruding truncated cone or truncated sphere profile.
